# EUROPÄISCHE PATENTSCHRIFT

(11) **EP 3 602 746 B1**
(45) Veröffentlichungstag und Bekanntmachung des Hinweises auf die Patenterteilung: **15.06.2022**
(21) Anmeldenummer: 18711221.4
(22) Anmeldetag: 26.02.2018
(51) Int. Cl.: H02K 7/00, B60K 17/02, H02K 7/108, F16D 21/06, F16D 25/08, F16D 25/10

(54) **ANTRIEBSSTRANGEINHEIT MIT GETRIEBESEITIGER LAGERUNG EINER DREIFACHKUPPLUNG EINES HYBRIDMODULS**
DRIVETRAIN UNIT WITH TRANSMISSION-SIDE MOUNTING OF A TRIPLE CLUTCH OF A HYBRID MODULE
UNITÉ CHAÎNE CINÉMATIQUE COMPRENANT UN SUPPORT CÔTÉ BOÎTE DE VITESSES D'UN EMBRAYAGE TRIPLE D'UN MODULE HYBRIDE

(30) Priorität: 23.03.2017 DE 102017106278
(43) Veröffentlichungstag der Anmeldung: 05.02.2020
(73) Patentinhaber: Schaeffler Technologies AG & Co. KG, 91074 Herzogenaurach (DE)
(72) Erfinder: REITZ, Dierk, 76534 Baden-Baden (DE)
(86) Internationale Anmeldenummer: PCT/DE2018/100167
(87) Internationale Veröffentlichungsnummer: WO 2018/171830

(56) Entgegenhaltungen:
- EP-A1- 1 857 700
- CN-U- 205 768 618
- DE-A1- 10 036 504
- DE-A1-102015 215 895
- DE-T5-112012 001 033
- US-A1- 2012 255 826

## Beschreibung

Die Erfindung betrifft eine Antriebsstrangeinheit für ein Kraftfahrzeug, wie ein Pkw, Lkw, Bus oder sonstiges Nutzfahrzeug, mit einem Hybridmodul, das mit einer einen Stator und einen Rotor aufweisenden elektrischen Maschine, jeweils miteinander verbindbare Kupplungsbestandteile aufweisenden Kupplungen und einem Rotorträger ausgestattet ist, wobei an dem Rotorträger der Rotor angebracht ist und mit dem jeweils ein Kupplungsbestandteil der Kupplungen drehfest verbunden ist, angebracht ist, und einer mittels einer zweiten Getriebeeingangswellen mit dem Hybridmodul zusammenwirkenden / gekoppelten oder koppelbaren Getriebeeinrichtung. Die Erfindung betrifft somit eine Antriebsstrangeinheit in Form eines Zusammenbaus aus einem Hybridmodul (wiederum als modulare Vorrichtung / modulares System bestehend aus einer elektrischen Maschine und Kupplungen ausgebildet) sowie einer Getriebeeinrichtung.

Gattungsgemäßer Stand der Technik ist beispielhaft aus der DE 10 2013 006 857 A1 bekannt. Hierin ist eine Hybridantriebsanordnung mit einer elektrischen Maschine offenbart. Radial innerhalb eines Tragbereiches ist eine Trennkupplung angeordnet, wobei die Trennkupplung als Lamellenkupplung ausgebildet ist, sodass über eine Kühlmitteldurchführung ein aus der Trennkupplung austretendes Kühlmittel mehreren Kühlmittelkanälen zuleitbar ist.

Bezüglich weiteren Standes der Technik wird auf die EP 1 857 700 A1, auf die DE 100 36 504 A1, auf die DE 10 2015 215895 A1, auf die DE 11 2012 001033 T5, auf die CN 205 768 618 U und auf die US 2012/255826 A1 verwiesen.

Bei den aus dem Stand der Technik bekannten Hybridmodulen hat es sich jedoch als Nachteil herausgestellt, dass deren einzelne Bestandteile meist relativ aufwändig gelagert sind. In bekannten Konstruktionen wird häufig eine Wandung an einem gehäusefesten Bestandteil des Hybridmoduls vorgesehen, an der die Bestandteile dann abgestützt werden. Aufgrund der notwendigen Abmaße dieser gehäusefesten Wandung wird insbesondere in axialer Richtung des Hybridmoduls relativ viel Bauraum benötigt. Dadurch werden wiederum die Einsatzmöglichkeiten des Hybridmoduls verringert.

Es ist daher Aufgabe der vorliegenden Erfindung, die aus dem Stand der Technik bekannten Nachteile zu beheben und insbesondere eine Antriebsstrangeinheit zur Verfügung zu stellen, durch die der Bauraum des Hybridmoduls weiter reduziert wird.

Diese Aufgabe der Erfindung wird erfindungsgemäß durch die Merkmale des Anspruchs 1 gelöst.

Hierbei ist der Rotorträger erfindungsgemäß an der zweiten Getriebeeingangswelle relativ zu dieser verdrehbar gelagert.

Durch die Abstützung / Lagerung des Rotorträgers der Getriebeeingangswelle der Getriebeeinrichtung dient der Rotorträger nicht nur als zentrale Lagerung des Rotors sondern auch als zentrale Lagerung der einzelnen Kupplungsbestandteile der Kupplungen. Dadurch können mehrere der bisher umgesetzten vereinzelten Lagerstellen in einer zentralen Lagerung zusammengefügt werden. Somit wird auch eine Gehäusewand, die bisher zur Abstützung des Rotorträgers notwendig war, eingespart. Eine deutliche Verkleinerung des axialen Bauraums des Hybridmoduls ist die Folge.

Weitere vorteilhafte Ausführungsformen sind mit den Unteransprüchen beansprucht und nachfolgend näher erläutert.

Der Rotorträger ist erfindungsgemäß direkt an der zweiten Getriebeeingangswelle relativ zu dieser verdrehbar gelagert.

Erfindungsgemäß weist der Rotorträger einen in radialer Richtung verlaufenden Zentralsteg auf, der über ein Wälzlager an der zweiten Getriebeeingangswelle abgestützt ist. Dadurch ergibt sich eine für die radiale Abstützung des Rotorträgers leistungsfähige Lagerung.

Erfindungsgemäß weist eine erste Kupplung der Kupplungen einen an dem Rotorträger drehfest angebrachten ersten Kupplungsbestandteil und einen zweiten Kupplungsbestandteil auf, der (vorzugsweise über ein weiteres Wälzlager) an dem Rotorträger relativ zu diesem verdrehbar gelagert ist. Dadurch ist die erste Kupplung vollständig an dem Rotorträger gelagert / abgestützt.

Hinsichtlich der Betätigung der ersten Kupplung ist es vorteilhaft, wenn die erste Kupplung mittels eines, eine Drehdurchführung aufweisenden, ersten Betätigungssystems betätigt ist. Dadurch ist für die erste Kupplung ein besonders platzsparendes Betätigungssystem umgesetzt.

In diesem Zusammenhang ist es zweckmäßig, wenn das erste Betätigungssystem derart ausgebildet ist, dass ein zur Betätigung der ersten Kupplung benötigtes Druckfluid über eine Eingangswelle (Hybridmoduleingangswelle), die drehfest mit dem zweiten Kupplungsbestandteil der ersten Kupplung gekoppelt ist, zugeführt wird.

Erfindungsgemäß weist eine zweite Kupplung der Kupplungen einen an dem Rotorträger drehfest angebrachten ersten Kupplungsbestandteil und einen drehfest mit einer ersten Getriebeeingangswelle verbundenen zweiten Kupplungsbestandteil auf. Somit ist auch die zweite Kupplung sicher abgestützt.

Ist die zweite Kupplung mittels eines, einen zentralen Nehmerzylinder oder eine Drehdurchführung aufweisenden, zweiten Betätigungssystems betätigt, ist auch die Betätigung der zweiten Kupplung besonders platzsparend umgesetzt.

Erfindungsgemäß weist eine dritte Kupplung der Kupplungen einen an dem Rotorträger drehfest angebrachten ersten Kupplungsbestandteil und einen zweiten Kupplungsbestandteil auf, wobei der zweite Kupplungsbestandteil drehfest mit einer / der zweiten Getriebeeingangswelle verbunden ist. Dadurch ist die dritte Kupplung sicher an der zweiten Getriebeeingangswelle abgestützt.

Dem entsprechend ist es wiederum für die dritte Kupplung vorteilhaft, diese mittels eines, einen zentralen Nehmerzylinder oder eine Drehdurchführung aufweisenden, dritten Betätigungssystems zu betätigen.

Des Weiteren ist es bevorzugt, sowohl die zweite Kupplung als auch die dritte Kupplung mit einem gemeinsamen Nehmerzylinder, nämlich einem doppelten Nehmerzylinder / Doppelnehmerzylinder, besonders bevorzugt mittels eines Doppel-CSC (doppelten konzentrischen Nehmerzylinders) zu betätigen. Dadurch wird der Bauraumbedarf der zweiten und dritten Betätigungssysteme weiter reduziert.

Erfindungsgemäß durchragt eine erste Getriebeeingangswelle eine den Zentralsteg abstützende als Hohlwelle ausgebildete zweite Getriebeeingangswelle, daher ist der Zentralsteg bei der Montage einfach auf der ihn abstützenden Getriebeeingangswelle aufsetzbar.

Des Weiteren ist es vorteilhaft, wenn eine, mehrere oder alle der Kupplungen nass laufend ausgebildet ist/sind.

Zweckmäßig ist es auch, wenn eine Eingangswelle des Hybridmoduls (vorzugsweise direkt) an dem Rotorträger relativ zu diesem verdrehbar gelagert ist.

In anderen Worten ausgedrückt, ist somit erfindungsgemäß vorgeschlagen, eine Dreifachkupplung (erste, zweite und dritte Kupplung), an einer Getriebeseite (Getriebeeingangswelle) zu lagern. Erfindungsgemäß ist ein Hybridmodul mit der (vorzugsweise nass laufenden) Dreifachkupplung sowie einer elektrischen Maschine eingesetzt. Die Dreifachkupplung sowie die elektrische Maschine sind unter der Verwendung eines Kugellagers an einer Getriebeeingangswelle abgestützt. Eine Eingangswelle des Hybridmoduls ist wiederum an einem Rotorträger abgestützt.

Die Erfindung wird nun nachfolgend anhand einer Figur nach einem bevorzugten Ausführungsbeispiel näher erläutert.

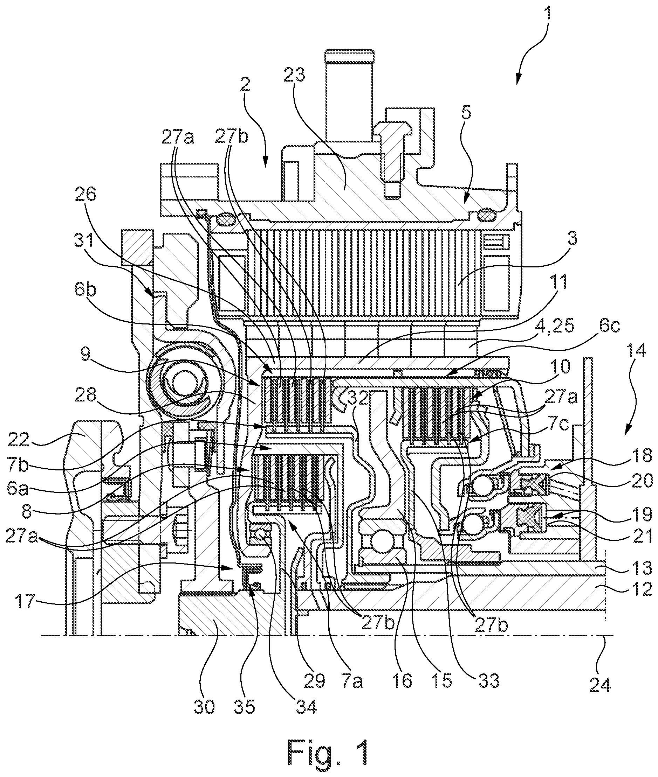

Es zeigt die einzige Fig. 1 eine Längsschnittdarstellung einer erfindungsgemäßen Antriebsstrangeinheit samt Hybridmodul sowie mit dem Hybridmodul drehgekoppelten Getriebeeingangswellen einer Getriebeeinrichtung.

Die Figur ist lediglich schematischer Natur und dient ausschließlich dem Verständnis der Erfindung.

In Fig. 1 ist eine erfindungsgemäße Antriebsstrangeinheit 1 veranschaulicht. Die Antriebsstrangeinheit 1 ist in Fig. 1 bereits in einem Antriebsstrang eines Kraftfahrzeuges eingesetzt. Die Antriebsstrangeinheit 1 bildet insbesondere eine Einheit aus einem Hybridmodul 2 und einer Getriebeeinrichtung 14 aus. Die Getriebeeinrichtung 14 ist als ein übliches Kraftfahrzeuggetriebe, hier als ein Doppelkupplungsgetriebe, ausgestaltet. In diesem Ausführungsbeispiel sind der Übersichtlichkeit halber neben dem Hybridmodul 2 lediglich zwei Getriebeeingangswellen 12 und 13 der Getriebeeinrichtung 14 abgebildet. Zudem ist die Antriebsstrangeinheit 1 seitens des Hybridmoduls 2 bereits drehfest mit einer Ausgangswelle 22 (Kurbelwelle) einer Verbrennungskraftmaschine, wie einem Otto- oder Dieselmotor, drehgekoppelt. Das Hybridmodul 2 ist ein Modul bestehend aus einer elektrischen Maschine 5, die als Elektromotor und Generator verwendbar ist, sowie mehreren Kupplungen 8, 9, 10. Die Antriebsstrangeinheit 1 ist folglich als hybride Antriebsstrangeinheit 1 umgesetzt und im Betrieb in einem Hybridantriebsstrang verwendet.

Das Hybridmodul 2 weist ein Gehäuse 23 auf. An einer (radialen) Innenseite des Gehäuses 23 ist ein Stator 3 der elektrischen Maschine 5 aufgenommen / angebracht. Radial innerhalb des Stators 3 (in Bezug auf eine Drehachse 24 des Hybridmoduls 2 / der Getriebeeingangswellen 12, 13) ist ein ringförmig ausgestalteter Rotor 4 in Form mehrerer Blechpakete 25 angeordnet. Der Rotor 4 ist drehfest auf einem Rotorträger 11 angebracht. Der Rotorträger 11 weist einen Hülsenbereich 26 auf, auf dessen radialer Außenseite der Rotor 4 / das Blechpaket 25 fest angebracht ist.

Mit dem Rotorträger 11 sind zudem erste Kupplungsbestandteile 6a, 6b und 6c von drei Kupplungen 8, 9, 10 drehfest verbunden. Die jeweilige Kupplung 8, 9 und 10 ist als Lamellenreibkupplung ausgebildet. Die drei Kupplungen 8, 9, 10 sind insbesondere allesamt als nass laufende Kupplungen ausgeführt.

Eine erste Kupplung 8 weist im Wesentlichen einen ersten Kupplungsbestandteil 6a sowie einen zweiten Kupplungsbestandteil 7a auf. Der erste Kupplungsbestandteil 6a ist drehfester Bestandteil des Rotorträgers 11. Insbesondere weist der erste Kupplungsbestandteil 6a mehrere in axialer Richtung beabstandet zueinander angeordnete sowie relativ zueinander verschiebbare erste Reibelemente 27a in Form von Reiblamellen auf. Der Rotorträger 11 bildet einen sich in radialer Richtung von dem Hülsenbereich 26 aus nach innen erstreckenden Scheibenbereich 28 aus. An dem Scheibenbereich 28 ist ein sich in axialer Richtung erstreckender Aufnahmebereich vorgesehen, der den ersten Kupplungsbestandteil 6a bildet und die ersten Reibelemente 27a relativ zueinander in axialer Richtung verschiebbar sowie drehfest aufnimmt. Mehrere zweite Reibelemente 27b, die wiederum als Reiblamellen ausgeformt sind, sind an einem Tragelement 29 axial beabstandet und relativ zueinander in axialer Richtung verschiebbar aufgenommen. Die zweiten Reibelemente 27b am Tragelement 29 wechseln sich in axialer Richtung mit den ersten Reibelementen 27a, unter Ausbildung eines gemeinsamen Reibelementpaketes / Lamellenpaketes, ab. Die zweiten Reibelemente 27b sind an dem Tragelement 29 drehfest angebracht. Die zweiten Reibelemente 27b sowie das Tragelement 29 bilden gemeinsam den zweiten Kupplungsbestandteil 7a aus. Das Tragelement 29 ist weiter mit einer Eingangswelle 30 des Hybridmoduls 2 drehverbunden.

Die Eingangswelle 30 dient in einem in Fig. 1 dargestellten Betriebszustand für den zweiten Kupplungsbestandteil 7a als Drehverbindung mit der Ausgangswelle 22 der Verbrennungskraftmaschine. In Drehmomentübertragungsrichtung zwischen der Ausgangswelle 22 und der Eingangswelle 30 ist in diesem Ausführungsbeispiel zusätzlich ein als Zweimassenschwungrad ausgebildeter Drehschwingungsdämpfer eingesetzt. Der Drehschwingungsdämpfer 31 verbindet die Eingangswelle 30 dauerhaft drehfest mit der Ausgangswelle 22.

Die erste Kupplung 8 ist somit in Bezug auf die Verbrennungskraftmaschine als Trennkupplung ausgestaltet. Die beiden anderen Kupplungen 9 und 10 sind jeweils als eine Teilkupplung einer Doppelkupplung / Doppelkupplungseinrichtung ausgestaltet.

Die zweite Kupplung 9 und die dritte Kupplung 10 sind im Wesentlichen wie die erste Kupplung 8 aufgebaut. Demnach weist sowohl die zweite Kupplung 9 als auch die dritte Kupplung 10 einen ersten Kupplungsbestandteil 6b, 6c auf. Auch die ersten Kupplungsbestandteile 6b, 6c sind jeweils mit mehreren ersten Reibelementen 27a ausgestaltet, die drehfest, jedoch axial verschiebbar an dem Rotorträger 11, nämlich an dem Hülsenbereich 26, aufgenommen sind. Mit jeweils einem zweiten Kupplungsbestandteil 7b bzw. 7c sind die Kupplungen 9 und 10 mit einer der Getriebeeingangswellen 12, 13 weiter verbunden.

Die zweite Kupplung 9 ist mit ihren Reibelementen 27a und 27b radial außerhalb der Reibelemente 27a und 27b der ersten Kupplung 8 angeordnet. Auch überlagert die zweite Kupplung 9 mit ihren Reibelementen 27a und 27b teilweise in axialer Richtung die Reibelemente 27a und 27b der ersten Kupplung 8. Die mehreren ersten Reibelemente 27a der zweiten Kupplung 9 sind an einer Innenumfangsseite des Rotorträgers 11 drehfest aufgenommen. Diese ersten Reibelemente 27a wechseln sich in axialer Richtung wiederum mit den an einem weiteren Tragelement 32 drehfest aufgenommenen zweiten Reibelementen 27b der zweiten Kupplung 9 ab. Das Tragelement 32 ist mittels einer Steckverzahnung drehfest mit der ersten Getriebeeingangswelle 12 der Getriebeeinrichtung 14 verbunden.

Die dritte Kupplung 10 ist mit ihren ersten Reibelementen 27a ebenfalls an einer Innenumfangsseite des Rotorträgers 11 am Hülsenbereich 26 drehfest angebracht, wobei zwischen jeweils zwei benachbarten ersten Reibelementen 27a wiederum ein zweites Reibelement 27b der dritten Kupplung 10 angeordnet ist. Somit sind die Reibelemente 27a und 27b der dritten Kupplung 10 wiederum derart angeordnet, dass sie, wie auch die Reibelemente 27a und 27b der zweiten Kupplung 9, zusammen ein Reibelementpaket ausbilden. Mehrere zweite Reibelemente 27b der dritten Kupplung 10 sind auf einem weiteren Tragelement 33 (der dritten Kupplung 10) drehfest sowie in axialer Richtung relativ zueinander verschiebbar aufgenommen. Das Tragelement 33 ist über eine Steckverzahnung auf einer radialen Außenseite der als Hohlwelle ausgebildeten zweiten Getriebeeingangswelle 13 drehfest angebracht.

Die erste Getriebeeingangswelle 12 ist in diesem Ausführungsbeispiel jene Getriebeeingangswelle, die die zweite Getriebeeingangswelle 13 in axialer Richtung durchdringt. Die erste Getriebeeingangswelle 12 ist ebenfalls zumindest abschnittsweise, hier gar über ihre gesamte Länge, hohl / als Hohlwelle ausgeformt, kann jedoch alternativ als Vollwelle ausgebildet sein.

An dem Rotorträger 11 ist ein in radialer Richtung in Bezug auf die Drehachse 24 verlaufender Zentralsteg 15 ausgebildet, der an der zweiten Getriebeeingangswelle 13 gelagert / abgestützt ist. Somit ist der Rotorträger 11 direkt an der zweiten Getriebeeingangswelle 13 relativ zu dieser verdrehbar gelagert. Der Zentralsteg 15 erstreckt sich, in der axialen Richtung gesehen, zwischen den beiden Kupplungen 9 und 10 in radialer Richtung von dem Hülsenbereich 26 aus nach innen, zu der zweiten Getriebeeingangswelle 13 hin. Der Zentralsteg 15 ist mittels eines Wälzlagers 16 in Form eines Kugellagers relativ zu der zweiten Getriebeeingangswelle 13 drehbar abgestützt. Das Wälzlager 16 ist zwischen einer Außenumfangsseite der zweiten Getriebeeingangswelle 13 sowie einer Innenumfangsseite des Zentralsteges 15 eingespannt. Das Wälzlager 16 dient direkt sowohl zur radialen als auch bevorzugt zur axialen Abstützung des Rotorträgers 11 relativ zu der zweiten Getriebeeingangswelle 13. Das Wälzlager 16 ist in axialer Richtung zwischen den beiden Steckverzahnungen der Tragelemente 32 und 33 mit der jeweiligen Getriebeeingangswelle 12, 13 angeordnet. Daher ist das Wälzlager 16 in axialer Richtung zwischen der zweiten Kupplung 9 und der dritten Kupplung 10 mittig / zentral angeordnet.

Des Weiteren ist zu erkennen, dass der zweite Kupplungsbestandteil 7a der ersten Kupplung 8 mittels eines weiteren Wälzlagers 34 in Form eines Kugellagers relativ zu dem Scheibenbereich 28 drehbar gelagert ist. Somit ist der zweite Kupplungsbestandteil 7a und wiederum die Eingangswelle 30 relativ zu dem Rotorträger 11 und somit indirekt auch zu der zweiten Getriebeeingangswelle 13 abgestützt / gelagert.

Des Weiteren ist in Fig. 1 zu erkennen, dass die jeweilige Kupplung 8, 9, 10 mit einem Betätigungssystem 17, 18, 19 versehen ist. Die erste Kupplung 8 ist mittels eines ersten Betätigungssystems 17 betätigt. Dieses erste Betätigungssystem 17 ist hydraulisch aktuiert. Das erste Betätigungssystem 17 weist eine Drehdurchführung 35 auf, die so ausgestaltet ist, dass sie zur Betätigung der ersten Kupplung 8 das entsprechende Druckfluid, vorzugsweise ein Drucköl, über die Eingangswelle 30 zum Betätigen der ersten Kupplung 8 ins Innere des Hybridmoduls 2 leitet. Die detaillierte Leitung des Druckfluids ist der Übersichtlichkeit halber nicht weiter dargestellt.

Ein zweites Betätigungssystem 18 der zweiten Kupplung 9 ist mittels eines Nehmerzylinders 20 umgesetzt. Auch die dritte Kupplung 10 ist mittels eines einen Nehmerzylinders 21 aufweisenden (dritten) Betätigungssystems 19 betätigt. Die beiden Nehmerzylinder 20 und 21 sind zusammen in einer gemeinsamen Nehmerzylindereinheit untergebracht. Diese Nehmerzylindereinheit ist insbesondere als Doppel-CSC ausgebildet. Alternativ hierzu ist es jedoch auch wiederum möglich, die beiden Betätigungssysteme 18 und 19 der zweiten und dritten Kupplungen 9, 10 jeweils mit einer Drehdurchführung auszubilden.

Prinzipiell sei darauf hingewiesen, dass statt der Dreifachkupplung in weiteren, nicht zur Erfindung gehörenden Ausführungen auch lediglich eine Zweifachkupplung mit nur zwei der drei Kupplungen 8, 9, 10 in dem Hybridmodul 2 vorgesehen ist. Dabei ist dann auch nur eine der beiden Getriebeeingangswellen 12, 13 gemäß der zweiten Getriebeeingangswelle 13 des zuvor beschriebenen bevorzugten Ausführungsbeispiels ausgebildet sowie eingesetzt.

In anderen Worten ausgedrückt, ist ein gesamter rotierender Teil (der mit dem Rotorträger 11 gekoppelte Teil des Hybridmoduls 1) auf einer der Getriebeeingangswellen 13 gelagert. Damit entfällt im Vergleich zum Stand der Technik einer Wand, was zu einem Bauraumvorteil von etwa 10 mm führt. Aufgrund der Lagerbasis wird der Achsversatz zwischen Kupplungsscheibe und Eingangswelle deutlich reduziert. Für die Trennung des Nassraumes zum Trockenraum wird lediglich ein Abdeckblech benötigt. Wie im Gesamtschnitt nach Fig. 1 gezeigt, wird die gesamte Kupplung (dritte Kupplung 10) auf der Hohlwelle (zweite Getriebeeingangswelle 13) mit einem Kugellager 16 gelagert. Die Lagerung der Hybridmodul-Eingangswelle 30 erfolgt nicht mehr an der Zwischenwand sondern am Rotorträger 11. Dier Betätigung von K1 /K2 (zweite Kupplung 9 (K1) und dritte Kupplung 10 (K2)) erfolgt über Doppel-CSC (Fig. 1) oder alternativ über Drehdurchführung. Die Betätigung der K0 (erste Kupplung 8) erfolgt über Drehdurchführung 35; das Drucköl wird über die Eingangswelle 30 zugeführt.

### Bezugszeichenliste

- 1: Antriebsstrangeinheit
- 2: Hybridmodul
- 3: Stator
- 4: Rotor
- 5: elektrische Maschine
- 6a: erster Kupplungsbestandteil der ersten Kupplung
- 6b: erster Kupplungsbestandteil der zweiten Kupplung
- 6c: erster Kupplungsbestandteil der dritten Kupplung
- 7a: zweiter Kupplungsbestandteil der ersten Kupplung
- 7b: zweiter Kupplungsbestandteil der zweiten Kupplung
- 7c: zweiter Kupplungsbestandteil der dritten Kupplung
- 8: erste Kupplung
- 9: zweite Kupplung
- 10: dritte Kupplung
- 11: Rotorträger
- 12: erste Getriebeeingangswelle
- 13: zweite Getriebeeingangswelle
- 14: Getriebeeinrichtung
- 15: Zentralsteg
- 16: Wälzlager
- 17: erstes Betätigungssystem
- 18: zweites Betätigungssystem
- 19: drittes Betätigungssystem
- 20: erster Nehmerzylinder
- 21: zweiter Nehmerzylinder
- 22: Ausgangswelle
- 23: Gehäuse
- 24: Drehachse
- 25: Blechpaket
- 26: Hülsenbereich
- 27a: erstes Reibelement
- 27b: zweites Reibelement
- 28: Scheibenbereich
- 29: Tragelement der ersten Kupplung
- 30: Eingangswelle
- 31: Drehschwingungsdämpfer
- 32: Tragelement der zweiten Kupplung
- 33: Tragelement der dritten Kupplung
- 34: Wälzlager
- 35: Drehdurchführung

## Patentansprüche

1. Antriebsstrangeinheit (1) für ein Kraftfahrzeug, mit
einem Hybridmodul (2), das mit einer einen Stator (3) und einen radial innerhalb des Stators (3) angeordneten Rotor (4) aufweisenden elektrischen Maschine (5), drei jeweils miteinander verbindbare erste und zweite Kupplungsbestandteile (6a,6b,6c,7a,7b,7c) aufweisenden Kupplungen (8, 9, 10) und einem Rotorträger (11) ausgestattet ist, an dem der Rotor (4) angebracht ist und mit dem jeweils der erste Kupplungsbestandteil (6a, 6b, 6c) der drei Kupplungen (8, 9, 10) drehfest verbunden ist und
einer mittels einer zweiten Getriebeeingangswelle (13) mit dem Hybridmodul (2) zusammenwirkenden Getriebeeinrichtung (14), wobei
der zweite Kupplungsbestandteil (7a) der ersten Kupplung (8) der drei Kupplungen (8, 9, 10) an dem Rotorträger (11) relativ zu diesem verdrehbar gelagert ist und weiter mit einer Eingangswelle (30) des Hybridmoduls (2) drehverbunden ist, wobei die Eingangswelle (30) mit einer Ausgangswelle (22) einer Verbrennungskraftmaschine drehfest verbunden ist,
wobei der zweite Kupplungsbestandteil (7b) der zweiten Kupplung (9) der drei Kupplungen (8, 9, 10) drehfest mit einer ersten Getriebeeingangswelle (12) verbunden ist, wobei der zweite Kupplungsbestandteil (7c) der dritten Kupplung (10) der drei Kupplungen (8, 9, 10) drehfest mit der zweiten Getriebeeingangswelle (13) verbunden ist,
die erste Getriebeeingangswelle (12) die als Hohlwelle ausgebildete zweite Getriebeeingangswelle (13) durchragt und
der Rotorträger (11) an der zweiten Getriebeeingangswelle (13) relativ zu dieser verdrehbar gelagert ist,
wobei
der Rotorträger (11) einen Zentralsteg (15) aufweist, der über ein Wälzlager (16) an der zweiten Getriebeeingangswelle (13) abgestützt ist,
der Zentralsteg (15) axial zwischen der zweiten Kupplung (9) und der dritten Kupplung (10) angeordnet ist und sich in radialer Richtung nach innen erstreckt, und das Wälzlager (16) zwischen der Außenumfangsseite der zweiten Getriebeeingangswelle (13) sowie einer Innenumfangsseite des Zentralstegs (15) eingespannt ist.

2. Antriebsstrangeinheit (1) nach Anspruch 1, **dadurch gekennzeichnet, dass** die erste Kupplung (8) mittels eines eine Drehdurchführung (35) aufweisenden ersten Betätigungssystems (17) betätigt ist.

3. Antriebsstrangeinheit (1) nach Anspruch 1 oder 2 **dadurch gekennzeichnet, dass** die zweite Kupplung (9) mittels eines einen zentralen Nehmerzylinder (20) oder eine Drehdurchführung aufweisenden zweiten Betätigungssystems (18) betätigt ist.

4. Antriebsstrangeinheit (1) nach einem der Ansprüche 1 bis 3, **dadurch gekennzeichnet, dass** die dritte Kupplung (10) mittels eines einen zentralen Nehmerzylinder (21) oder eine Drehdurchführung aufweisenden dritten Betätigungssystems (19) betätigt ist.

5. Antriebsstrangeinheit (1) nach einem der Ansprüche 1 bis 4, **dadurch gekennzeichnet, dass** eine, mehrere oder alle Kupplungen (8, 9, 10) nasslaufend ausgebildet ist/sind.

6. Antriebsstrangeinheit (1) nach einem der Ansprüche 1 bis 5, **dadurch gekennzeichnet, dass** eine Eingangswelle (30) des Hybridmoduls (2) an dem Rotorträger (11) relativ zu diesem verdrehbar gelagert ist.

## Claims

1. A drivetrain unit (1) for a motor vehicle, comprising
a hybrid module (2) that is equipped with an electric machine (5) having a stator (3) and a rotor (4) arranged radially inside the stator (3), three clutches (8, 9, 10) having first and second interconnectable clutch components (6a, 6b, 6c, 7a, 7b, 7c), and a rotor carrier (11), to which the rotor (4) is attached and to which the respective first clutch component (6a, 6b, 6c) of the three clutches (8, 9, 10) is non-rotatably connected and
a transmission device (14) interacting with the hybrid module (2) by means of a second transmission input shaft (13), wherein
the second clutch component (7a) of the first clutch (8) of the three clutches (8, 9, 10) is mounted on the rotor carrier (11) so as to be rotatable relative thereto, and
is further rotatably connected to an input shaft (30) of the hybrid module (2), wherein the input shaft (30) is non-rotatably connected to an output shaft (22) of an internal combustion engine,
wherein the second clutch component (7b) of the second clutch (9) of the three clutches (8, 9, 10) is non-rotatably connected to a first transmission input shaft (12), wherein the second clutch component (7c) of the third clutch (10) of the three clutches (8, 9, 10) is non-rotatably connected to the second transmission input shaft (13),
the first transmission input shaft (12) protrudes from the second transmission input shaft (13) that is designed as a hollow shaft, and
the rotor carrier (11) is mounted on the second transmission input shaft (13) so as to be rotatable relative thereto, wherein
the rotor carrier (11) has a central web (15) that is supported on the second transmission input shaft (13) by a rolling bearing (16),
the central web (15) is axially arranged between the second clutch (9) and the third clutch (10) and extends inwards in the radial direction, and
the rolling bearing (16) is clamped between the outer circumferential side of the second transmission input shaft (13) and an inner circumferential side of the central web (15).

2. A drivetrain unit (1) according to claim 1, **characterised in that** the first clutch (8) is actuated by means of a first actuating system (17) having a rotary feedthrough (35).

3. A drivetrain unit (1) according to claim 1 or 2, **characterised in that** the second clutch (9) is actuated by means of a second actuating system (18) having a central slave cylinder (20) or a rotary feedthrough.

4. A drivetrain unit (1) according to one of claims 1 to 3, **characterised in that** the third clutch (10) is actuated by means of a third actuating system (19) having a central slave cylinder (21) or a rotary feedthrough.

5. A drivetrain unit (1) according to one of claims 1 to 4, **characterised in that** one, a plurality of or all of the clutches (8, 9, 10) is/are designed as wet clutches.

6. A drivetrain unit (1) according to one of claims 1 to 5, **characterised in that** an input shaft (30) of the hybrid module (2) is mounted on the rotor carrier (11) so as to be rotatable relative thereto.

## Revendications

1. Unité chaîne cinématique (1) pour un véhicule à moteur, comprenant
un module hybride (2) qui est équipé d'une machine électrique (5) présentant un stator (3) et un rotor (4) disposé radialement à l'intérieur du stator (3), de trois embrayages (8, 9, 10) présentant respectivement des premier et second éléments d'embrayage (6a, 6b, 6c, 7a, 7b, 7c) pouvant être reliés les uns aux autres et d'un support de rotor (11), sur lequel le rotor (4) est monté et auquel respectivement le premier élément d'embrayage (6a, 6b, 6c) des trois embrayages (8, 9, 10) est relié de manière solidaire en rotation et
un système de boîte de vitesses (14) coopérant avec le module hybride (2) au moyen d'un second arbre d'entrée (13) de boîte de vitesses,
le second élément d'embrayage (7a) du premier embrayage (8) des trois embrayages (8, 9, 10) étant monté sur le support de rotor (11) de manière à pouvoir tourner par rapport à celui-ci et
est en outre relié en rotation à un arbre d'entrée (30) du module hybride (2), l'arbre d'entrée (30) étant relié de manière solidaire en rotation à un arbre de sortie (22) d'un moteur à combustion interne,
le second élément d'embrayage (7b) du deuxième embrayage (9) des trois embrayages (8, 9, 10) étant relié de manière solidaire en rotation à un premier arbre d'entrée (12) de boîte de vitesses, le second élément d'embrayage (7c) du troisième embrayage (10) des trois embrayages (8, 9, 10) étant relié de manière solidaire en rotation au second arbre d'entrée (13) de boîte de vitesses,
le premier arbre d'entrée (12) de boîte de vitesses traversant le second arbre d'entrée (13) de boîte de vitesses conçu comme un arbre creux et
le support de rotor (11) étant monté sur le second arbre d'entrée (13) de boîte de vitesses de manière à pouvoir tourner par rapport à celui-ci,
le support de rotor (11) présentant une entretoise centrale (15) qui est supportée au moyen d'un roulement (16) sur le second arbre d'entrée (13) de boîte de vitesses,
l'entretoise centrale (15) étant disposée axialement entre le deuxième embrayage (9) et le troisième embrayage (10) est s'étendant vers l'intérieur dans la direction radiale et
le roulement (16) étant serré entre le côté périphérique externe du second arbre d'entrée (13) de boîte de vitesses et un côté périphérique interne de l'entretoise centrale (15).

2. Unité chaîne cinématique (1) selon la revendication 1, **caractérisée en ce que** le premier embrayage (8) est actionné au moyen d'un premier système d'actionnement (17) présentant un passage rotatif (35).

3. Unité chaîne cinématique (1) selon la revendication 1 ou 2, **caractérisée en ce que** le deuxième embrayage (9) est actionné au moyen d'un deuxième système d'actionnement (18) présentant un cylindre récepteur central (20) ou un passage rotatif.

4. Unité chaîne cinématique (1) selon l'une quelconque des revendications 1 à 3, **caractérisée en ce que** le troisième embrayage (10) est actionné au moyen d'un troisième système d'actionnement (19) présentant un cylindre récepteur central (21) ou un passage rotatif.

5. Unité chaîne cinématique (1) selon l'une quelconque des revendications 1 à 4, **caractérisée en ce qu'**un, plusieurs ou tous les embrayages (8, 9, 10) est/sont conçus pour un fonctionnement en milieu humide.

6. Unité chaîne cinématique (1) selon l'une quelconque des revendications 1 à 5, **caractérisée en ce qu'**un arbre d'entrée (30) du module hybride (2) est monté sur le support de rotor (11) de manière à pouvoir tourner par rapport à celui-ci.
